# EUROPEAN PATENT SPECIFICATION

(11) **EP 1 604 253 B1**
(45) Date of publication and mention of the grant of the patent: **19.10.2011**
(21) Application number: 04717440.4
(22) Date of filing: 04.03.2004
(51) Int. Cl.: G05D 11/13, G01J 3/46

(54) **APPARATUS AND METHOD FOR CONTINUOUS PRODUCTION OF PAINT WITH AUTOMATIC ADJUSTMENT OF COLOR**
VORRICHTUNG UND VERFAHREN ZUR KONTINUIERLICHEN HERSTELLUNG VON FARBEN MIT AUTOMATISCHER ANPASSUNG DER FARBE
APPAREIL ET METHODE POUR UNE PRODUCTION CONTINUE DE PEINTURE FAISANT APPEL A UN REGLAGE AUTOMATIQUE DE COULEUR

(30) Priority: 07.03.2003 US 453282 P
(43) Date of publication of application: 14.12.2005
(73) Proprietor: The Sherwin-Williams Company, Cleveland, OH 44115 (US)
(72) Inventor: WIERZBICKI, Daniel, S., University Heights, OH 44118 (US); MANTER, James, C., M., Sophia, NC 27350 (US)
(74) Representative: Gritschneder, Martin
(86) International application number: PCT/US2004/006679
(87) International publication number: WO 2004/081685

(56) References cited:
- EP-A- 0 304 172
- WO-A-02/082026
- US-A- 4 403 866

## Description

### BACKGROUND OF THE INVENTION

The present invention is directed to a system producing paint and more specifically to a system for continuously producing paint with automatic adjustment of color.

Conventionally, water-bome paint is produced in a batch process, such as the one disclosed in U.S. Patent No. 4,403,866 to Falcoff et al. In a typical batch process, paint components are metered into a large mixing vessel where they are mixed together by a mechanical mixer with a rotating blade or impeller. The initial amounts of the components added to the mixing vessel are determined by a formula for the paint. Due to variations in the properties of the components, the properties of the paint produced from the initial components may not meet certain specified requirements. Accordingly, the paint is analyzed and, ifneeded, additional amounts of the components and/or other components are added to the paint in the mixing vessel to bring the paint into conformance with the specified requirements. This cycle of analysis and addition is repeated until the paint meets the specified requirements. Once the paint meets the specified properties, the process is complete and the paint is pumped from the mixing vessel to a holding tank or a filling station.

U.S. Patent No. 4,403,866 is considered the closest prior art document.

Variations of the foregoing batch process have been proposed. One such variation is a process disclosed in PCT Application, Publication Number WO 99/48602 (the "48602 Application"). Although styled as a continuous process, the process of the 48602 Application is really a modified batch process. In the process of the 48602 Application, a large mixing vessel containing a base or concentrate is connected to a recirculating loop. The base or concentrate is pumped into the recirculating loop where the base or concentrate is adjusted and then analyzed to determine whether the base or concentrate meets certain specifications. Until the base or concentrate meets the specifications the base or concentrate is returned to the mixing vessel. Once the base or concentrate meets the specifications, the base or concentrate is directed to a storage tank. The amount of paint produced, i.e., the "batch size", is determined by the amount of base or concentrate initially present in the storage tank.

A similar process is disclosed in WO 02/082026.

Recently, it has been proposed to produce colored coatings in a continuous process. For example, U.S. Patent No. 6,010,032 to Vermylen et al. discloses a method and apparatus for continuously producing a colored coating, such as a paste, for use in the continuous production of a coated, dyed, printed, or painted material, such as carpeting. While the method and apparatus of the Vermylen et al. patent may be ideally suited for producing paste for carpeting, it is not ideally suited for producing paint with strict color requirements. In particular, the method and apparatus of the Vermylen et al. patent does not have a system for continuously monitoring and adjusting the color of the colored coating during its production.

SUMMARY OF THE INVENTION The invention as claimed in claim 1 solves the problem of how to continuously produce paint wherein a continuous color monitoring and adjustment is provided.

The production system includes a main mixing pipe connected to storage vessels to continuously receive flows of paint components from the storage vessels. The flows of the paint components are mixed together in the main mixing pipe to form a continuous flow of a paint composition. The main mixing pipe has an outlet portion and an inlet portion, wherein the outlet portion in not connected back to the inlet portion. A fluid inspection cell is connected to the main mixing pipe for continuously receiving a sample portion of the flow of the paint composition. A spectrophotometer is positioned to view the sample portion ofthe flow ofthe paint composition through a window ofthe fluid inspection cell. A control unit is electrically connected to the spectrophotometer to receive electrical signals generated by the spectrophotometer. The control unit is operable to perform a comparison of the measured color values to desired color values that are stored in the control unit and to produce electrical control signals dependent on the comparison. Colorant pumps are electrically connected to the control unit to receive the electrical control signals. The colorant pumps are operable to pump the colorants to the main mixing pipe in response to the control signals.

### BRIEF DESCRIPTION OF THE DRAWINGS

The features, aspects, and advantages of the present invention will become better understood with regard to the following description, appended claims, and accompanying drawings where:
Fig. 1 shows a schematic view of a first portion of a paint production system;
Fig. 2 shows a schematic view of a second portion of the paint production system;
Fig. 3 shows a schematic view of a color measurement system of the paint production system;
Fig. 4 shows a side view of a fluid inspection cell of the color measurement system;
Fig. 5 shows a front view of a middle housing of the fluid inspection cell;
Fig. 6 shows a top view of the middle housing;
Fig. 7 shows a side view of the middle housing with a lens spaced therefrom;
Fig. 8 shows a front view of a front plate of the fluid inspection cell;
Fig. 9 shows a side view of the front plate;
Fig. 10 shows a front view of a rear plate of the fluid inspection cell; and
Fig. 11 shows a side view of the rear plate.

### DETAILED ESCRIPTION OF THE PREFERRED EMBODIMENTS

It should be noted that in the detailed description that follows, identical components have the same reference numerals, regardless of whether they are shown in different embodiments of the present invention. It should also be noted that in order to clearly and concisely disclose the present invention, the drawings may not necessarily be to scale and certain features of the invention may be shown in somewhat schematic form.

One of the components of the present invention relates to the measurement of color. Briefly, color is a sensation evoked by the physical stimulation of color photoreceptor cone cells in the human retina. The stimulation consists of electromagnetic radiation in the visible spectrum comprising wavelengths between 380 and 780 nm. The photoreceptor cone cells can be separated into three classes, with each class being sensitive to a different spectral distribution of radiation. This trichromacy of color sensation permits the color of an object to be described by three numerical components, such as the tristimulus values X, Y and Z, which are based on the tristimulus responses x, y, and z of a standard observer that were developed through experimentation by the Commission Internationale de L'Éclairage (CIE) in 1931. More specifically, the tristimulus values X, Y and Z are the integrals of the products of the functions x, y and z with the radiant energy distribution functions from the object.

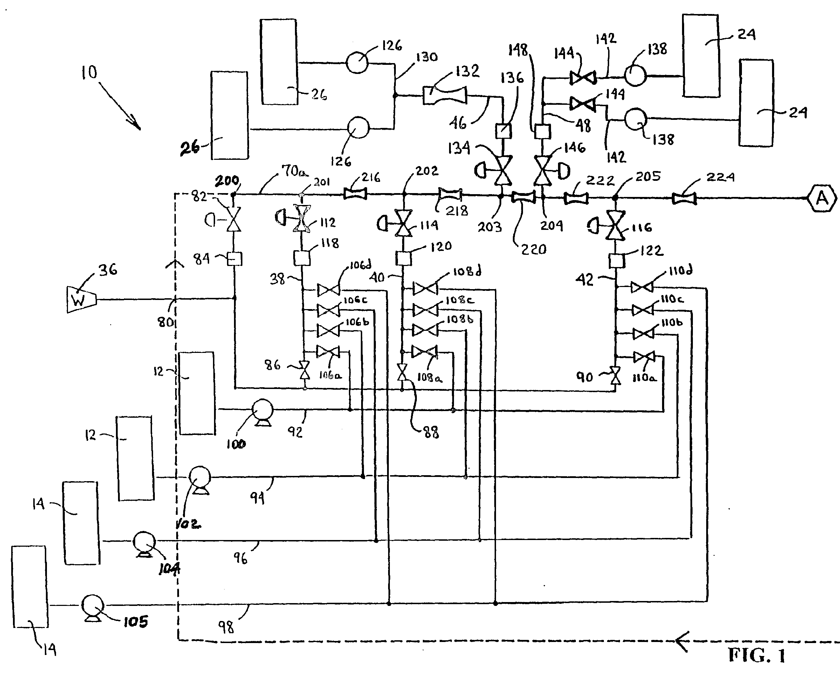

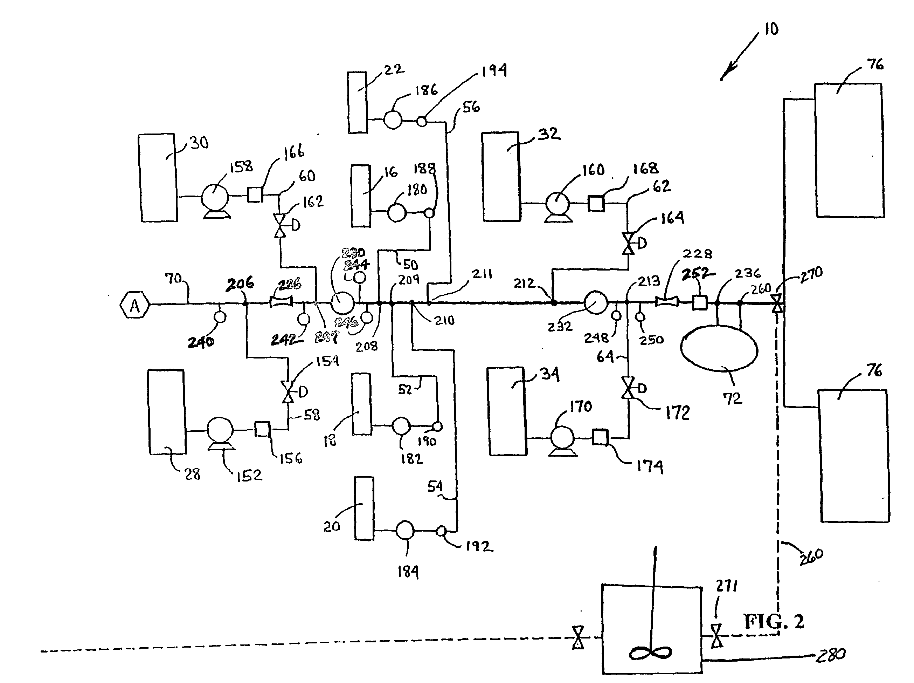

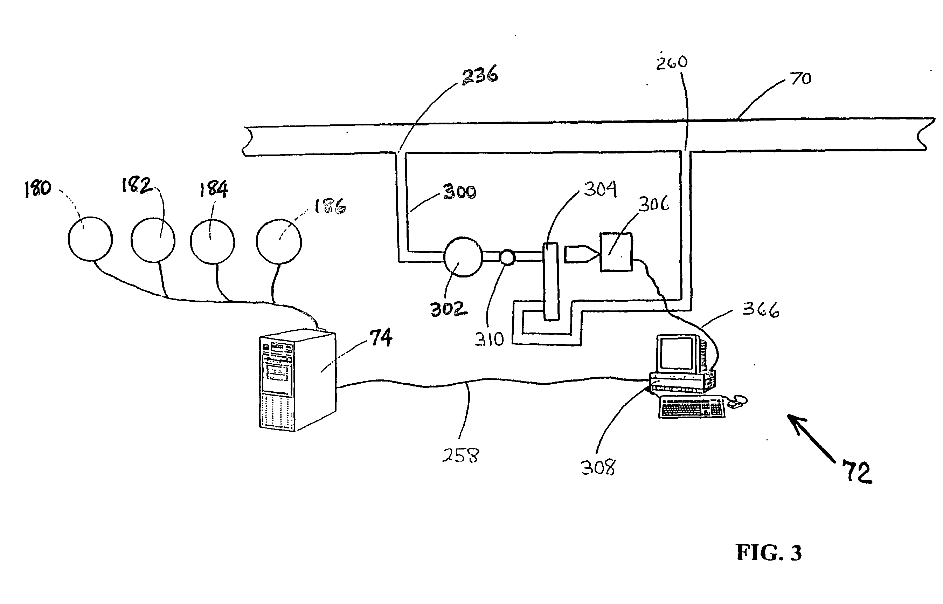

Referring now to Figs. 1 and 2 together, there is shown a schematic view of a production system 10 for continuously producing water-borne paint. Generally, the production system 10 includes a plurality of binder supply tanks 12, a plurality of extender supply tanks 14, a plurality of colorant supply tanks 16,18, 20, 22, a plurality of slurry supply tanks 24, a plurality of grind paste supply tanks 26, a plurality of additive supply tanks 28, 30, 32, 34, a water supply conduit 36, a plurality of supply feed conduits 38,40,42, a grind paste feed conduit 46, a slurry feed conduit 48, a plurality of colorant feed conduits 50, 52, 54, 56, a plurality of additive feed conduits 58, 60, 62, 64, a main mixing pipe 70, a color measurement system 72, a controller 74 (shown in Fig. 3), and a plurality of holding tanks 76 for holding the paint that is produced.

A water line 80 connects the water supply conduit 36 to the main mixing pipe 70 to provide water to the main mixing pipe 70 during the production run of a paint composition. A flow control valve 82 is disposed in the water line 80 and is operable to control the flow of water into the main mixing pipe 70. The flow control valve 82 is electrically connected to the controller 74 by wiring (not shown). Upstream of the flow control valve 82, a mass flow meter 84 is connected into the water line 80 to provide a measure of the mass flow of water into the main mixing pipe 70. The mass flow meter 84 is electrically connected to the controller 74 by wiring (not shown).

In addition to being connected to the main mixing pipe 70 to provide water to the main mixing pipe 70 during the production run of a paint composition, the water line 80 is also connected to the supply feed conduits 38-42 to permit the supply feed conduits 38-42 to be rinsed between production runs. The water line 80 is connected to the supply feed conduits through pneumatic shut-off valves 86, 88, 90.

The binder supply tanks 12 each hold a binder latex comprising a polymeric resin, such as an acryclic, a vinyl acrylic, or a vinyl resin, dispersed in water. The binder supply tanks 12 typically hold different binder latexes. The Krebs Stormer viscosity of each of the binder latexes can be less than 70 Ku.

The extender supply tanks 14 each hold an extender slurry comprising a mixture ofwater, dispersant, and a pigment extender, such as calcium carbonate, clay, baryte, or polymeric microspheres. The extender supply tanks 14 typically hold different extender slurries. The Krebs Stormer viscosity of each of the extender slurries can be less than 70 Ku.

The binder supply tanks 12 and the extender supply tanks 14 are connected to the supply feed conduits 38-42 by pipe systems 92, 94, 96, 98 to permit each of the supply conduits 38-42 to receive a binder latex from any one of the binder supply tanks 12 or an extender slurry from any one of the extender supply tanks 14. Pumps 100, 102, 104, 105 are disposed in the pipe systems 92-98 to pump the contents of the binder supply tanks 12 and extender supply tanks 14 through the pipe systems 92-98 to the supply feed conduits 38-42. Outlet portions of the pipe systems 92-98 are connected to the supply feed conduits 38-42 through pneumatic shut-offvalves 106a-d, 108a-d,110a-d, which permit the binder latexes and extender slurries to be selectively supplied to the supply feed conduits 38-42.

Outlets of the supply feed conduits 38-42 are connected to the main mixing pipe 70. Flow control valves 112, 114, 116 are disposed in the supply feed conduits 38-42 and are operable to control the flows of the binder latexes and extender slurries into the main mixing pipe 70. The flow control valves 112-116 are electrically connected to the controller 74 by wiring (not shown). Upstream of the flow control valves 112-116, mass flow meters 118, 120, 122 are respectively connected into the supply feed conduits 38-42 to provide measures of the mass flows of the binder latexes and extender slurries into the main mixing pipe 70. The mass flow meters 118-122 are electrically connected to the controller 74 by wiring (not shown).

The grind paste supply tanks 26 each hold a grind paste, which is a dispersion of titanium dioxide and/or extender pigments in a resin. The grind paste may be prepared by dispersing the titanium dioxide and/or extender pigments into the resin in the presence of plasticizers, wetting agents, surfactants or other ingredients in a ball mill, sand mill or continuous mill, until the titanium dioxide and/or extender pigments has/have been reduced to the desired particle size and is wetted by the resin or dispersed in it. The grind paste supply tanks 26 are provided with impellers (not shown) or other agitators to continuously mix the grind paste and prevent the titanium dioxide and/or extender pigments from settling out. The Krebs Stormer viscosity of the grind paste can be less than 150 Ku.

Pumps 126 are connected to outlets of the grind paste supply tanks 26 and are operable to pump the grind paste from the grind paste supply tanks 26 through a pipe system 130 to the grind paste feed conduit 46. An outlet portion of the pipe system 130 is connected to an in-line mixer 132 disposed in the grind paste feed conduit 46.

An outlet of the grind paste feed conduit 46 is connected to the main mixing pipe 70. A flow control valve 134 is disposed in the grind paste feed conduit 46 and is operable to control the flow of grind paste into the main mixing pipe 70. The flow control valve 134 is electrically connected to the controller 74 by wiring. Between the in-line mixer 132 and the flow control valve 134, a mass flow meter 136 is connected into the grind paste feed conduit 46 to provide a measure of the flow of the grind paste into the main mixing pipe 70. The mass flow meter 136 is electrically connected to the controller 74 by wiring (not shown).

The slurry supply tanks 24 hold TiO₂ slurries, each of which is a mixture of water, dispersant, and titanium dioxide (TiO₂). For example, the Krebs Stormer viscosity of the TiO₂ slurries can be less than 70 Ku. Pumps 138 are connected to outlets of the slurry supply tanks 24 and are operable to pump the TiO₂ slurries from the slurry supply tanks 24 through pipe systems 142 to the slurry feed conduit 48. Outlet portions of the pipe systems 142 are connected to the slurry feed conduit 48 through pneumatic shut-off valves 144, which permit the TiO₂ slurries to be selectively supplied to the slurry feed conduit 48.

An outlet of the slurry feed conduit 48 is connected to the main mixing pipe 70. A flow control valve 146 is connected into the slurry feed conduit 48 and is operable to control the flow of the TiO₂ slurry from the slurry feed conduit 48 into the main mixing pipe 70. The flow control valve 146 is electrically connected to the controller 74 by wiring (not shown). Upstream of the flow control valve 146, a mass flow meter 148 is connected into the slurry feed conduit 48 to provide a measure of the flow of the TiO₂ slurry into the main mixing pipe 70. The mass flow meter 148 is electrically connected to the controller 74 by wiring (not shown).

The additive supply tank 28 holds a pH control agent, such as 2-amino-2-methyl-1-propanol. A pump 152 is connected to an outlet of the additive supply tank 28 and is operable to pump the pH control agent from the additive supply tank 28 through a pipe system to the additive supply conduit 58. An outlet of the additive supply conduit 58 is connected to the main mixing pipe 70. A flow control valve 154 is connected into the additive supply conduit 58 and is operable to control the flow ofpH control agent into the main mixing pipe 70. The flow control valve 154 is electrically connected to the controller 74 by wiring (not shown). Upstream of the flow control valve 154, a mass flow meter 156 is connected into the additive supply conduit 58 to provide a measure of the flow ofthe pH control agent into the main mixing pipe 70. The mass flow meter 156 is electrically connected to the controller 74 by wiring (not shown).

The additive supply tanks 30, 32 hold first and second thickeners, respectively. Each of the first and second thickeners can be an associative thickener, such as a polyurethane thickener. Pumps 158, 160 are connected to outlets of the additive supply tanks 30, 32 and are operable to pump the first and second thickeners from the additive supply tanks 30, 32 through pipe systems to the additive supply conduits 60, 62, respectively. Outlets of the additive supply conduits 60, 62 are connected to the main mixing pipe 70. Flow control valves 162, 164 are respectively connected into the additive supply conduits 60, 62 and are operable to control the flows of the first and second thickeners into the main mixing pipe 70. The flow control valves 162, 164 are electrically connected to the controller 74 by wiring (not shown). Upstream of the flow control valves 162, 164, mass flow meters 166, 168 are connected into the additive supply conduits 60, 62 to provide measures of the flows of the thickeners into the main mixing pipe 70. The mass flow meters 166, 168 are electrically connected to the controller 74 by wiring (not shown).

The additive supply tank 34 holds a defoamer, such as a petroleum hydrocarbon, a long chain saturated alcohol, or an emulsion of a silicone polymer. A pump 170 is connected to an outlet of the additive supply tank 34 and is operable to pump the defoamer from the additive supply tank 34 through a pipe system to the additive supply conduit 64. An outlet of the additive supply conduit 64 is connected to the main mixing pipe 70. A flow control valve 172 is connected into the additive supply conduit 64 and is operable to control the flow of defoamer into the main mixing pipe 70. The flow control valve 172 is electrically connected to the controller 74 by wiring (not shown). Upstream of the flow control valve 172, a mass flow meter 174 is connected into the supply conduit 64 to provide a measure of the flow of the defoamer into the main mixing pipe 70. The mass flow meter 174 is electrically connected to the controller 74 by wiring (not shown).

The colorant supply tanks 16-22 hold different colorants. For example, the colorant supply tank 16 may hold a blue colorant, the colorant supply tank 18 may hold a black colorant, the colorant supply tank 20 may hold a yellow colorant, and the colorant supply tank 22 may hold a red colorant. Each colorant comprises solid particles of pigment dispersed in a dispersant system, such as a mixture of water and ethylene glycol. Each of the colorant supply tanks 16-22 includes a mixer (not shown) for agitating the colorant to prevent the pigment from settling. The colorant supply tanks 16-22 are connected to the colorant supply conduits by pipe systems. Metering pumps 180, 182, 184 and 186 are respectively connected into the colorant supply conduits 50-56. The metering pumps 180-186 are progressing cavity pumps operable to accurately pump metered amounts of the colorants from the colorant supply tanks 16-22 through the colorant supply conduits 50-56 and into the main mixing pipe 70. An example of a commercially available progressing cavity pump that may be used is a Group D dosing pump available from Seepex, Inc., having a place of business at 511 Speedway Drive, Enon, Ohio 45323. The metering pumps 180-186 are electrically connected to the controller 74 by wiring (not shown). Downstream of the metering pumps 180-186, mass flow transmitters 188, 190,192, 194 are respectively connected into the colorant supply conduits 50-56 to provide measures of the flows of the colorants into the main mixing pipe 70. The mass flow transmitters 188-194 are electrically connected to the controller 74 by wiring (not shown).

The main mixing pipe 70 can have a diameter of about four inches (4"). The pipe 70 has an inlet portion 70a and an outlet portion. The inlet portion 70a includes a plurality of inlets 200-2, which are staggered along the axis of the main mixing pipe 70 so as to obtain sequenced mixing of the components as the components flow through the main mixing pipe 70. In the order of location along the main mixing pipe 70, starting at the beginning of the flow path through the main mixing pipe 70, the inlet 200 is connected to the water line 80, the inlet 201 is connected to the supply feed conduit 38 for one of the binders or one of the extenders, the inlet 202 is connected to the supply feed conduit 40 for one of the binders or one of the extenders, the inlet 203 is connected to the grind paste supply conduit 46 for the grind paste, the inlet 204 is connected to the slurry supply conduit 48 for one of the TiO₂ slurries, the inlet 205 is connected to the supply feed conduit 42 for one of the binders or one of the extenders, the inlet 206 is connected to the additive supply conduit 58 for the pH control agent, the inlet 207 is connected to the additive supply conduit 60 for the first thickener, the inlet 208 is connected to the colorant supply conduit 50 for the blue colorant, the inlet 209 is connected to the colorant supply conduit 52 for the black colorant, the inlet 210 is connected to the colorant supply conduit 54 for the yellow colorant, the inlet 211 is connected to the colorant supply conduit 56 for the red colorant, the inlet 212 is connected to the additive supply conduit 62 for the second thickener, and the inlet 213 is connected to the additive supply conduit 64 for the defoamer.

A first in-line mixer 216 is connected into the main mixing pipe 70 between the inlets 201, 202 for the supply feed conduits 38, 40. A second in-line mixer 218 is connected into the main mixing pipe 70 between the inlet 202 for the supply feed conduit 40 and the inlet 203 for the grind paste supply conduit 46. A third in-line mixer 220 is connected into the main mixing pipe 70 between the inlet 203 for the grind paste supply conduit 46 and the inlet 204 for the slurry supply conduit 48. A fourth in-line mixer 222 is connected into the main mixing pipe 70 between the inlet 204 for the slurry supply conduit 48 and the inlet 205 for the supply feed conduit 42 for one of the binders or one of the extenders. A fifth in-line mixer 224 is connected into the main mixing pipe 70 between the inlet 205 for the supply feed conduit 42 and the inlet 206 for the additive supply conduit 58 for the pH control agent. A sixth in-line mixer 226 is connected into the main mixing pipe 70 between the inlet 206 for the additive supply conduit 58 for the pH control agent and the inlet 207 for the additive supply conduit 60 for the first thickener. A first dynamic mixer 230 is connected into the main mixing pipe 70 between the inlet 207 for the additive supply conduit 60 for the first thickener and the inlet 208 for the colorant supply conduit 50 for the blue colorant. A second dynamic mixer 232 is connected into the main mixing pipe 70 between the inlet 212 for the additive supply conduit 62 for the second thickener and the inlet 213 for the additive supply conduit 64 for the defoamer. A seventh in-line mixer 234 is connected into the main mixing pipe 70 between the inlet 213 for the additive supply conduit 64 for the defoamer and a first sample connection 236 connected to the color measurement system 72.

The first through seventh in-line mixers 216-228 are conventional static mixers, i.e., mixers with no moving parts. Conventional static mixers operate by dividing a fluid stream into a plurality of substreams and then recombining the substreams into a main stream. The fluid stream may divided for example by one or more helical elements, a series of curved elements, a plurality of offset planar elements, one or more perforated plates, or a combination of the foregoing. The dividing elements are secured from movement within the main mixing pipe 70.

The first and second dynamic mixers 230, 232 are conventional power-driven mixers having a moving mixing element or impeller. Various types of impellers may be used, including helix, propeller, turbine, gate, anchor and paddle impellers. The first and second dynamic mixers 230, 232 are electrically connected to the controller 74 by wiring (not shown).

In addition to the in-line mixers 216-228 and the dynamic mixers 230, 232, a plurality of measurement devices are connected to the main mixing pipe 70 for measuring various properties of the paint as it is produced along the length of the main mixing pipe 70. For example, a first pressure measurement and transmitting device 240 is connected to the main mixing pipe 70 between the fifth in-line mixer 224 and the inlet 206 for the additive supply conduit 58 for the pH control agent. A pH measurement and transmitting device 242 is connected to the main mixing pipe 70 between the sixth in-line mixer 226 and the inlet 207 for the additive supply conduit 60 for the first thickener. A first viscosity measurement and transmitting device 244 is connected to the main mixing pipe 70 between the first dynamic mixer 230 and the inlet 208 for the colorant supply conduit 50 for the blue colorant. A second pressure measurement and transmitting device 246 is connected to the main mixing pipe 70 between the first viscosity measurement and transmitting device 244 and the inlet 208 for the colorant supply conduit 50 for the blue colorant. A second viscosity measurement and transmitting device 248 is connected to the main mixing pipe 70 between the second dynamic mixer 232 and the inlet 213 for the additive supply conduit 64 for the defoamer. A third pressure measurement and transmitting device 250 is connected to the main mixing pipe 70 between the inlet for the additive supply conduit 213 for the defoamer and the seventh in-line mixer 228. A mass flow meter 252 is connected into the main mixing pipe 70 between the seventh in-line mixer 228 and the holding tanks 76. The first, second, and third pressure measurement devices 240, 246, 250, the first and second viscosity measurement devices 244, 248, and the mass flow meter 252 are electrically connected to the controller 74 by wiring (not shown).

The controller 74 stores or is programmed to receive one or more formulas for paint to be manufactured by the production system 10 (hereinafter the "Production Formulas"). In contrast to typical paint formulas (which are batch formulas that specify set amounts of components), the Production Formulas are mass flow formulas, which specify mass flow rates of the required components. For each Production Formula, the corresponding paint is manufactured and run through the color measurement system 72 to obtain a "wet" color standard. The controller 74 stores or is programmed to receive the color standards for the Production Formulas.

Based on a selected Production Formula for a paint, the controller 74 determines the components that are required to manufacture the paint. For those components that are required by the selected Production Formula, the controller 74 transmits control signals to the shut-offvalves for the components, signalling the shut-offvalves to open (or remain open). Similarly, for those components that are not required by the selected Production Formula, the controller 74 transmits control signals to the shut-off valves for the components, signaling the shut-off valves to close (or remain closed).

The controller 74 determines what the mass flows of the various required components should be to maintain the relative proportions of the components based on a selected Production Formula. More specifically, the controller 74 uses the mass flow rate of the grind paste (as measured by the mass flow meter) to determine setpoints for the mass flow rates of the other components based on ratios of the components to the grind paste required by the selected Production Formula. Thus, if one of the Production Formulas calls for 100 pounds per minute of the grind paste and 200 pounds per minute of a particular binder and the grind paste is measured to be 80 pounds per minute, the controller will determine that the setpoint of the particular binder should be 160 pounds per minute.

The controller 74 converts the setpoints for the Production Formula components to control signals, which are transmitted over wiring to the flow control valves for the Production Formula components and control the movement (opening and closing) of the flow control valves. The control signal for a particular flow control valve is calculated using calibration information for the flow control valve, namely the change in mass flow rate through the flow control valve per unit change in movement of the flow control valve. The calibration information for the flow control valves is periodically checked and reset (if necessary) to ensure proper operation of the production system 10.

The controller 74 is electrically connected by wiring 258 to the color measurement system 72 for exchanging information therebetween so as to provide accurate control of the color of the paint being manufactured, as will be more fully described below.

Initially, the flow rates of the colorants supplied to the main mixing pipe 70 are determined by the controller 74 based on the selected Production Formula. The color measurement system 72, however, monitors the color of the paint being manufactured and determines whether it is within a certain color tolerance value of the color standard for the selected Production Formula. If the color of the paint being manufactured is not within the certain color tolerance value, the color matching software program in the computer transmits control signals the controller 74, instructing the controller 74 to vary the amounts of the colorants being added.

Referring now to Fig. 3, the color measurement system 72 generally comprises a sample line 300, a sample pump 302, a fluid inspection cell 304, a spectrophotometer 306 and a computer 308.

The sample line 300 of the color measurement system 72 is connected to the main mixing pipe 70 between the mass flow meter 252 and the holding tanks 76. More specifically, an inlet of the sample line 300 is connected to the main mixing pipe 70 at the first sample connection 236, while an outlet of the sample line 300 is connected to the main mixing pipe 70 at a second sample connection 260. The sample pump 302 and the fluid inspection cell 304 are connected into the sample line 300. The sample pump 302 is electrically connected to the controller 74 by wiring (not shown). The sample pump 302 can be a progressing cavity pump operable to pump paint through the fluid inspection cell 304 in a constant, uniform, non-pulsating flow. An example of a commercially available progressing cavity pump that may be used is the Group D dosing pump available from Seepex, Inc. Between the outlet of the sample pump 302 and the fluid inspection cell 304, a mass flow meter 310 is connected into the sample line 300 to provide a measure of the flow of paint into the fluid inspection cell 304. The mass flow meter 310 is electrically connected to the controller 74 by wiring (not shown). In response to the signal from the mass flow meter 310, the controller 74 controls the pump 302 in a manner to maintain a substantially constant flow rate of paint into the fluid inspection cell 304.

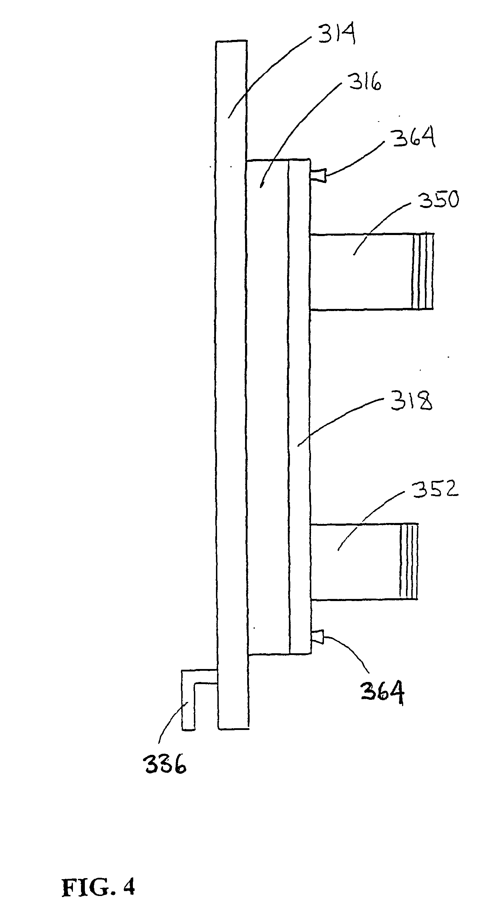

Referring now to Fig. 4, the fluid inspection cell 304 generally includes a front plate 314, a middle housing 316, and a rear plate 318. For example, the front plate 314, the middle housing 316 and the rear plate 318 can be composed of a strong, rigid material, such as steel.

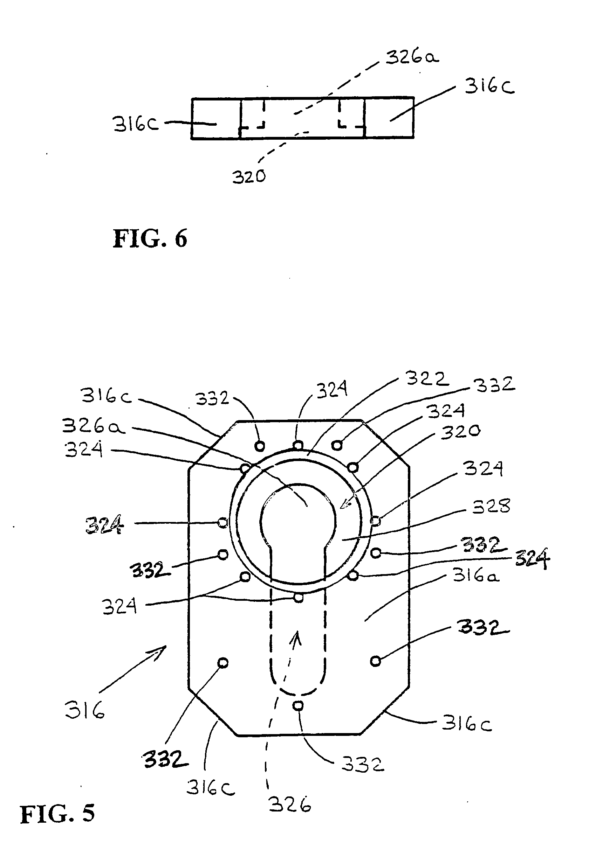

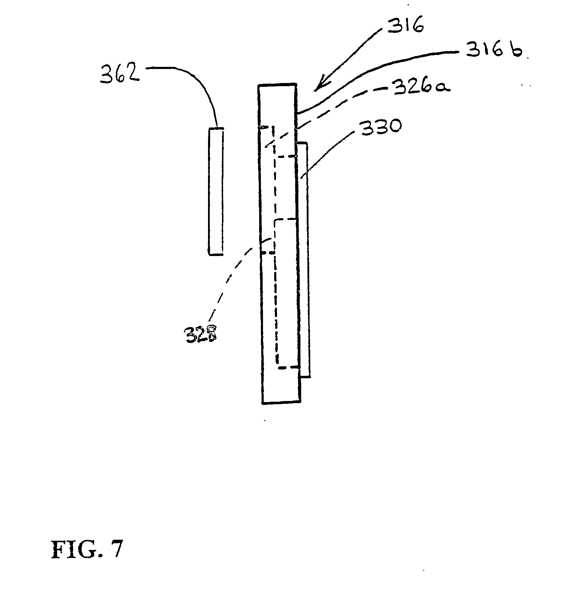

Referring now to Figs. 5-7, the middle housing 316 has planar first and second surfaces 316a,b and a plurality of side surfaces 316c defining a generally octagonal perimeter. A circular recess 320 is formed in the first surface 316a, toward a top end of the middle housing 316. An annular gasket 322 is disposed around the recess 320, on the first surface 316a. A plurality of threaded openings 324 are formed in the first surface 316a and are disposed around the gasket 322. A generally key-shaped groove 326 is formed in the second surface of the middle housing 316. An upper end portion 326a of the groove extends into the recess 320 to form a passage through the middle housing 316. The upper end portion 326a of the groove 326 has a width smaller than the diameter of the recess 320. In this manner, an interior surface of the recess 320 forms an annular ledge or shelf 328 around the end portion 326a. A key-shaped gasket 330 is disposed around the groove 326, on the second surface 316b of the middle housing 316. A plurality of mounting passages 332 are disposed around the key-shaped gasket 330 and extend through the middle housing 316.

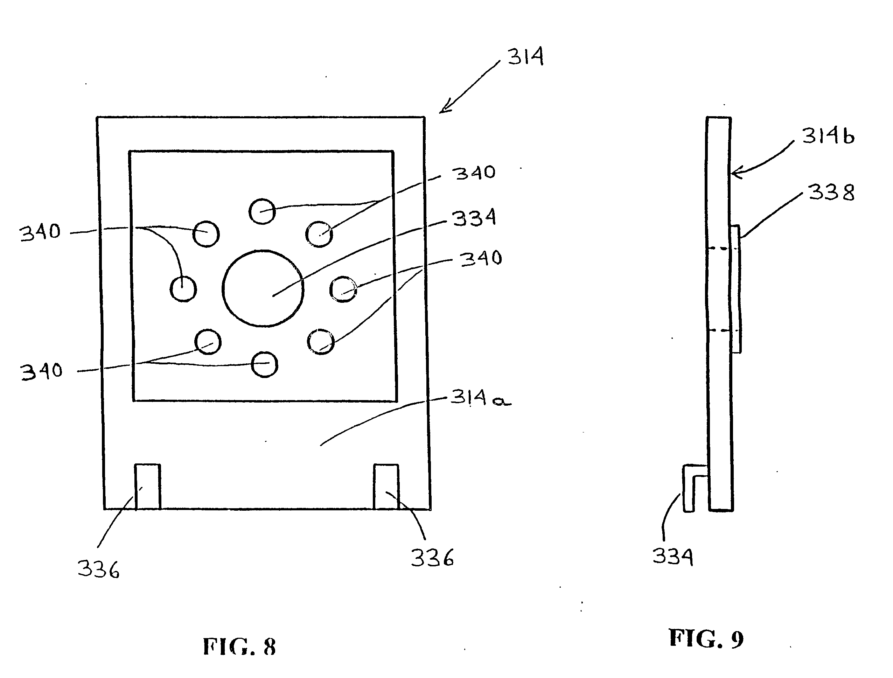

Referring now to Figs. 8 and 9, the front plate 314 is generally rectangular in shape and has planar first and second surfaces 314a,b. A circular opening 334 is formed in the front plate 314, toward a top end thereof. Hook-shaped mounts 336 may be joined to the first surface 314a of the front plate 314, toward a bottom end thereof An annular gasket 338 is disposed around the circular opening 334, on the second surface 314b of the front plate 314. A plurality of mounting holes 340 are disposed around the gasket 338 and extend through the front plate 314. The mounting holes 340 are positioned so as to be in alignment with the threaded openings 324 in the middle housing 316 when the front plate is 314 aligned over the middle housing 316. A plurality of threaded openings (not shown) are formed in the second surface 314b of the front plate 314 and are positioned so as to be in alignment with the mounting passages 332 in the middle housing 316 when the front plate 314 is aligned over the middle housing 316.

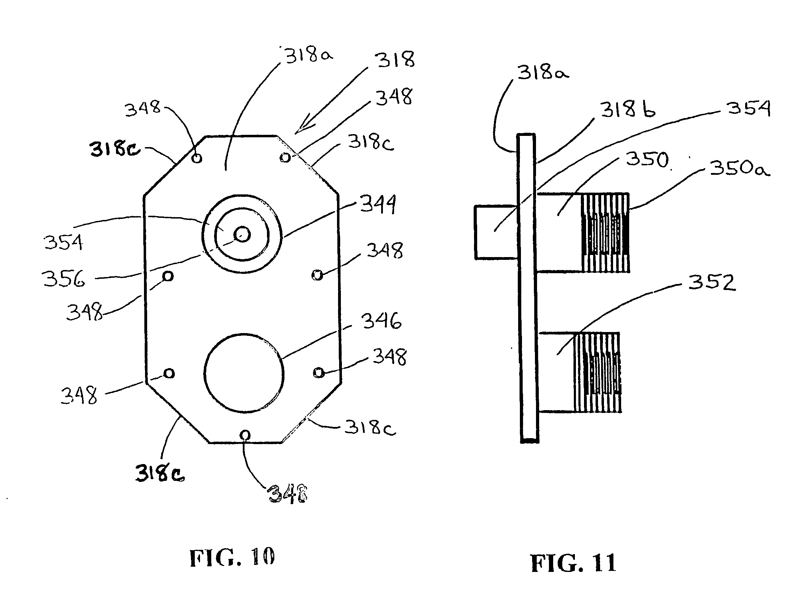

Referring now to Figs. 10 and 11, the rear plate 318 has planar first and second surfaces 318a, 318b and a plurality of side edges 318c defining a generally octagonal perimeter. Circular inlet and outlet openings 344, 346 are formed in the rear plate 318, toward a top end and a bottom end of the rear plate 318, respectively. A plurality of mounting passages 348 are formed in the rear plate 318, around the perimeter thereof The mounting passages 348 in the rear plate 318 are positioned so as to be in alignment with the mounting passages 332 in the middle housing 316 when the middle housing 316 is aligned over the rear plate 318.

Tubular inlet and outlet flow connectors 350, 352 are respectively secured within the inlet and outlet openings 344, 346 of the rear plate 318. The inlet and outlet flow connectors 350,352 have an interior diameter of about 1 inch. The inlet flow connector 350 extends rearwardly from the rear plate 318, with an inner end of the inlet flow connector 350 being secured within the inlet opening 344 and an outer end 350a of the outlet flow connector 350 being spaced from the second surface 318b of the rear plate 318. The outlet flow connector 352 extends rearwardly from the rear plate 318, with an inner end of the outlet flow connector 352 being secured within the outlet opening 346 and an outer end 352a of the outlet flow connector 352 being spaced from the second surface 318b of the rear plate 318. The outer ends 350a, 352a of the inlet and outlet flow connectors 350, 352, respectively, are threaded for connection to inlet and outlet portions of the sample line 300, respectively. A constriction insert 354 is secured within the inlet flow connector 350, at the inner end thereof, and extends forwardly from the rear plate 318. The constriction insert 354 has a restricted opening 356 of about 0.25 inches. The restricted opening 356 increases the velocity of the paint flowing into the fluid inspection cell 304 to ensure that the flow of paint is turbulent, which typically corresponds to a Reynold's Number above 3000.

A planar lens 362 having a circular shape and a smooth finish is provided for disposal in the recess 320 of the middle housing 316. The lens 362 has a diameter greater than the passage through the middle housing and, thus, has a peripheral portion that is supported by the shelf 328 when the lens 362 is disposed in the recess 320. The lens 362 is transparent and is composed of a material having a hardness greater than 7 mohs. For example, the lens 362 can be composed of sapphire.

Referring back to Fig. 4, when the fluid inspection cell 304 is assembled, the middle housing 316 is secured between the front and rear plates 314, 318 by a plurality of threaded bolts 364 that extend through the mounting passages 348 in the rear plate 318 and the mounting passages 332 in the middle housing 316, and have free ends threadably secured in the threaded openings in the second surface 314b of the front plate 314. The second surface 318b of the rear plate 318 covers the groove 326 in the middle housing 316, thereby forming an interior conduit through which paint may travel through the fluid inspection cell 304. The interior conduit is connected between, and disposed substantially perpendicular to, the inlet and outlet flow connectors 350, 352. In this manner, the interior conduit and the inlet and outlet flow connectors 350, 352 form a generally U-shaped flow path through the fluid inspection cell 304.

The lens 362 is disposed in the recess 320 of the middle housing 316, with the peripheral portion of the lens 362 being trapped between the shelf 328 of the middle housing 316 and the annular gasket 338 disposed around the circular opening 334, on the second surface 314b of the front plate 314. With the lens 362 so positioned, the plane of the lens 362 is disposed perpendicular to the flow of paint entering the fluid inspection cell 304 and at a first bend in the flow path through the fluid inspection cell 304. A plurality of screws (not shown) extend through the mounting holes 340 in the front plate 314 and are threadably received in the threaded openings 324 in the middle housing 316, thereby helping secure the front plate 314 to the middle housing 316. With the front plate 314 secured to the middle housing 316 in the foregoing manner and the lens 362 secured therebetween, the lens 362 is firmly secured from movement.

Referring back to Fig. 3, paint from the main mixing pipe 70 is pumped through the sample line 300 by the pump 302 and enters the fluid inspection cell 304 through the inlet connector 350. The paint passes through the inlet flow connector 350 and the constriction insert 354 and impinges against the lens 362. The paint then flows through the interior conduit and exits the fluid inspection cell 304 through the outlet flow connector 352. After flowing through the fluid inspection cell 304, the paint flows back to the main mixing pipe 70 through the outlet of the sample line 300. As set forth above, the flow of the paint through the fluid inspection cell 304 is turbulent.

The spectrophotometer 306 is mounted adjacent to the fluid inspection cell 304 such that its sample port is spaced a fixed distance of about 5 inches from the lens 362 of the fluid inspection cell 304. The spectrophotometer is operable to measure the color of the paint flowing through the fluid inspection cell 304. More specifically, the spectrophotometer 306 is for measuring the tristimulus values X, Y and Z of the paint. The spectrophotometer 306 may be any commercially available model that can continuously measure the tristimulus values X, Y and Z of the paint and generate a continuous digital signal representative thereof The spectrophotometer 306 can be of the dual-beam type, wherein the spectrophotometer 306 has a light source that is split into a sample beam and a reference beam, with the reference beam being used to correct for variations in the intensity of the light source. An example of such a dual beam spectrophotometer is the SpectraProbe XE available from HunterLab Associates, Inc.

Conventionally, a dual beam spectrophotometer includes the light source, a light analyzer, optics for conducting the sample beam to the fluid inspection cell, optics for collecting light reflected from the fluid inspection cell, optics for conducting the reference beam to the light analyzer, and a data processor. The light analyzer receives both the reference beam and the light reflected from the fluid inspection cell. The light analyzer includes a device for separating light into its component wavelengths, such as a diffraction grading or a prism, and an array of detectors to measure the intensities of the different wavelengths. Signals from the detector array are multiplexed and fed to the data processor, which produces a digital signal representative of the tristimulus values X, Y and Z. The spectrophotometer 306 is connected to the computer 308 by wiring 366 over which the digital signal is transmitted.

The spectrophotometer 306 calculates the X, Y and Z values of the paint flowing through the fluid inspection cell 304 from the paint's spectral curve, which is a plot of reflectance vs. wavelength. The spectrophotometer 306 determines the spectral curve of the paint through the visible light spectrum of 400-700 nanometers (nm), typically at 20 nm increments, and calculates the X, Y and Z values for the paint based on this data according to the formulas: 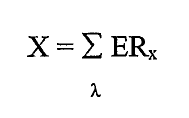 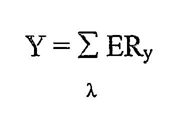 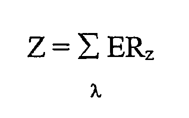 where E is the relative energy of a standard light source, R is the average reflectance of the target object and x, y, z are the color mixture functions for a specified observer.

The software program in the computer 308 receives the measured X, Y and Z values of the paint flowing through the fluid inspection cell 304 from the spectrophotometer 306 and uses them to control the color of the paint being produced. More specifically, the computer 308 compares the measured X, Y and Z values of the paint being produced to the X, Y and Z values of the color standard for the selected Production Formula and determines whether the difference is within the certain color tolerance value as determined by ΔE. If the difference is not within the certain color tolerance value, the computer 308 calculates the changes in the flow rates of the colorants needed to bring the paint within the color tolerance of the selected Production Formula.

The changes in flow rates of colorants required to shade the paint being manufactured from its measured X, Y and Z color readings to a color falling within the certain color tolerance value can be determined based on historical data of previous runs or can be determined by a series of mathematical calculations. If the changes are determined based on historical calculations, the measured tristimulus values are compared to a previous production run involving similar measured tristimulus values. By this method, a proportional change in flow rate of a colorant being added to the paint is made based upon the historically required change in flow rate of the colorant necessary to adjust from one set of tristimulus values to another.

The mathematical procedure utilized to calculate the changes in flow rates of the colorants based upon differences in X, Y and Z readings is based upon well known mathematical procedures that are used to calculate the addition of set amounts of colorants based on differences in X, Y and Z readings for batch systems. One such well known procedure is that described in Eugene Allen's article in the Journal of the Optical Society of America, Volume 64, Number 7, July 1974 pages 991 to 993 (the "Eugene Allen Article"). A procedure based on the Eugene Allen procedure is disclosed in U.S. Patent No. 4,887,217 to Sherman et al., which is assigned to the assignee of the present invention and is hereby incorporated by reference. In the present invention, the Eugene Allen procedure is modified to use mass flows of the colorants (and other components) instead of set amounts of the colorants and other components. For colorants having given concentrations, absorption coefficients and scattering coefficients, the modified Eugene Allen procedure provides a determination of the changes in the flow rates of the colorants that are required to adjust the X, Y, Z readings from one value to another. Since the paint is flowing and a given portion of the paint is tinted or shaded with colorants only once, the tinting or shading of the paint is not a strictly additive procedure as in a batch process, i.e., the amount of a particular colorant can be reduced and not just increased.

In one example of this procedure, a mathematical technique is first applied to the paint being manufactured to determine, by an iterative process, the flow rates of colorants theoretically required to essentially match the X, Y and Z values for the color standard for the selected Production Formula. In a second step the mathematical technique is again applied in an iterative process to determine the changes in flow rates of the colorants necessary to move from the measured color of the paint being manufactured to the standard for the selected Production Formula. The endpoint determination of each of the iterative steps is related to the difference between the measured values of X, Y and Z and the X, Y and Z values of the color standard of the selected Production Formula.

The mathematical equations for this type of calculation (assuming four colorants charged into the paint being produced and subsequently shading with three of those colorants) are described in the Eugene Allen Article

Once the computer 308 determines the changes in the flow rates of the colorants that are required to bring the color of the paint being manufactured within the color tolerance value, the computer 308 provides these changes to the controller 74, which generates control signals in response thereto. These control signals are transmitted to the metering pumps 180-186 and instruct the metering pumps 180-186 to change the flow rates of the colorants in accordance with the changes calculated by the computer 308.

In an arrangement, which is not part of the present invention, the fluid can also be circulated through a valve 270 to a recycle loop 260 back to the main mixing pipe 70. The optional recycle loop provides the ability to recycle the fluid for any further treatment, such as additional mixing, shading, or additives prior to the fluid being pumped to the holding tanks 76. The recycle loop 260 includes a surge tank 280 in which the fluid can be further agitated and accumulated prior to re-entering the process stream. Once the fluid is pumped into the holding tanks 76, valve arrangements 270 and 271 are closed, thereby allowing the fluid to bypass the recycle loop 260. The time and amount of recycling depends upon how quickly any additional desired properties are achieved.

While the invention has been shown and described with respect to particular embodiments thereof those embodiments are for the purpose of illustration rather than limitation, and other variations and modifications of the specific embodiments herein described will be apparent to those skilled in the art. Accordingly, the invention is not to be limited in scope and effect to the specific embodiments herein described, nor in any other way that is inconsistent with the extent to which the progress in the art has been advanced by the invention.

## Claims

1. Production system (10) for continuously producing a paint composition, said production system (10) comprising:
a plurality of storage vessels 12, 14, 16, 18, 20, 22, 24, 26, 28, 30, 32, 34 for holding components of the paint composition, said components comprising at least one colorant, each storage vessel (12, 14, 16, 18, 20, 22, 24, 26, 28, 30, 32, 34) being connected to a respective pump
a main mixing pipe (70) having an inlet portion (70a) and an outlet porticon, leading to holding tanks (76) for holding the paint that is produced wherein said outlet portion is not connected back to said inlet portion, and wherein said inlet portion (70a) has a plurality of inlets (208-211) connected to the storage vessels 12, 14, 16, 18, 20, 22, 24, 26, 28, 30, 32, 34 to continuously receive flows of the components from the storage vessels, said flows of components being mixed together in the main mixing pipe (70) to form a continuous flow of the paint composition out of the outlet portion of the main mixing pipe (70);
a colour measurement system (72), connected to the outlet portion of the main mixing pipe (70) via a sample connection (236) and a sample line (300), for continuously receiving a sample of the flow of the paint composition, said colour measurement system (72) comprising a sample pump (302) and a fluid inspection cell (304) both connected in series with the sample line (300), the fluid inspection cell (304) comprising a viewing window through which the sample may be viewed as it flows, the sample pump (302) being operable to pump the sample of the paint composition through the inspection cell (304) at a substantially constant turbulent flow;
a spectrophotometer (306) positioned to view the sample portion of the flow of the paint composition through the window of the fluid inspection cell (304), said spectrophotometer (306) being operable to measure color values of the sample portion and to generate at least one electrical signal representative thereof;
a control unit (74) electrically connected to the spectrophotometer (306) to receive the at least one electrical signal generated by the spectrophotometer (306), said control unit (74) being operable to perform a comparison of the measured color values to desired color values and to produce at least one electrical control signal dependent on the comparison;
at least one colorant pump electrically connected to the control unit (74) to receive the at least one electrical control signal, said at least one colorant pump being operable to pump the at least one colorant to the main mixing pipe (70) in response to the at least one electrical control signal.

2. The production system of claim 1, wherein the viewing window comprises a sapphire lens (362).

3. The production system of claim 2, wherein the plane of the lens (362) is disposed perpendicular to the flow of paint entering the fluid inspection cell (304).

4. The production system of claim 3, wherein the flow path of the fluid inspection cell (304) is generally U-shaped.

5. The production system of claim 1, wherein the inlets (208-211) are staggered along the axis of the main mixing pipe (70) so as to obtain sequenced mixing of the components as the components flow through the main mixing pipe (70).

## Patentansprüche

1. Herstellungssystem (10) zur kontinuierlichen Herstellung einer Farbzusammensetzung, wobei das Herstellungssystem (10) umfasst:
eine Mehrzahl von Speicherbehältern (12, 14, 16, 18, 20, 22, 24, 26, 28, 30, 32, 34) zur Aufnahme von Komponenten der Farbzusammensetzung, wobei die Komponenten mindestens ein Farbmittel umfassen, wobei jeder Speicherbehälter (12, 14, 16, 18, 20, 22, 24, 26, 28, 30, 32, 34) mit einer jeweiligen Pumpe verbunden ist;
ein Hauptmischrohr (70) mit einem Einlassteil (70a) und einem Auslass teil, das zu Auffangbehältern (76) zur Aufnahme der Farbe, die hergestellt wird, führt, wobei der Auslassteil nicht zum Einlassteil zurückverbunden ist und wobei der Einlassteil (70a) eine Mehrzahl von Einlässen (208-211) aufweist, die mit den Speicherbehältern (12, 14, 16, 18, 20, 22, 24, 26, 28, 30, 32, 34) verbunden sind, um kontinuierlich Flüsse der Komponenten von den Speicherbehältern zu empfangen, wobei die Komponentenflüsse im Hauptmischrohr (70) zusammengemischt werden, um einen kontinuierlichen Fluss der Farbzusammensetzung heraus aus dem Auslassteil des Hauptmischrohres (70) zu bilden;
ein Farbmesssystem (72), das über eine Probenverbindung (236) und eine Probenleitung (300) mit dem Auslassteil des Hauptmischrohres (70) verbunden ist, um kontinuierlich eine Probe des Flusses der Farbzusammensetzung zu empfangen, wobei das Farbmesssystem (72) eine Probenpumpe (302) und eine Fluidkontrollzelle (304) umfasst, die beide mit der Probenleitung (300) in Reihe verbunden sind, wobei die Fluidkontrollzelle (304) ein Sichtfenster enthält, durch das die Probe, während sie fließt, geprüft werden kann, wobei sich die Probenpumpe (302) betreiben lässt, um die Probe der Farbzusammensetzung bei einem im Wesentlichen konstanten turbulenten Fluss durch die Kontrollzelle (304) zu pumpen;
ein Spektralphotometer (306), das positioniert ist, um den Probenteil des Flusses der Farbzusammensetzung durch das Fenster der Fluidkontrollzelle (304) zu prüfen, wobei sich das Spektralphotometer (306) betreiben lässt, um Farbwerte des Probenteils zu messen und um mindestens ein elektrisches Signal, das dafür kennzeichnend ist, zu erzeugen;
eine Steuereinheit (74), die mit dem Spektralphotometer (306) elektrisch verbunden ist, um das mindestens eine durch das Spektralphotometer (306) erzeugte elektrische Signal zu empfangen, wobei sich die Steuereinheit (74) betreiben lässt, um einen Vergleich der gemessenen Farbwerte mit gewünschten Farbwerten auszuführen und um abhängig von dem Vergleich mindestens ein elektrisches Steuersignal zu erzeugen;
mindestens eine Farbmittelpumpe, die mit der Steuereinheit (74) elektrisch verbunden ist, um das mindestens eine elektrische Steuersignal zu empfangen, wobei sich die mindestens eine Farbmittelpumpe betreiben lässt, um ansprechend auf das mindestens eine elektrische Steuersignal das mindestens eine Farbmittel zum Hauptmischrohr (70) zu pumpen.

2. Herstellungssystem nach Anspruch 1, bei dem das Sichtfenster eine Saphirlinse (362) umfasst.

3. Herstellungssystem nach Anspruch 2, bei dem die Ebene der Linse (362) senkrecht zum in die Fluidkontrollzelle (304) eintretenden Fluss von Farbe angeordnet ist.

4. Herstellungssystem nach Anspruch 3, bei dem der Flussweg der Fluidkontrollzelle (304) im Allgemeinen U-förmig ist.

5. Herstellungssystem nach Anspruch 1, bei dem die Einlässe (208-211) entlang der Achse des Hauptmischrohres (70) versetzt sind, um ein sequenziell erfolgendes Mischen der Komponenten zu erhalten, während die Komponenten durch das Hauptmischrohr (70) fließen.

## Revendications

1. Système de production (10) pour produire continûment une composition de peinture, ledit système de production (10) comprenant :
une pluralité de cuves de stockage (12, 14, 16, 18, 20, 22, 24, 26, 28, 30, 32, 34) destinées à conserver des composants de la composition de peinture, lesdits composants comprenant au moins un colorant, chaque cuve de stockage (12, 14, 16, 18, 20, 22, 24, 26, 28, 30, 32, 34) étant raccordée à une pompe respective ;
un tuyau de mixage principal (70) comportant une partie d'admission (70a) et une partie de sortie conduisant à des réservoirs de conservation (76) pour conserver la peinture produite, ladite partie de sortie n'étant pas raccordée en boucle à ladite partie d'admission, et ladite partie d'admission (70a) comportant une pluralité d'admissions (208-211) connectée aux cuves de stockage (12, 14, 16, 18, 20, 22, 24, 26, 28, 30, 32, 34) afin de recevoir continûment des flux des composants depuis les cuves de stockage, lesdits flux de composants étant mélangés ensemble dans le tuyau de mixage principal (70) afin de former un flux continu de la composition de peinture hors de la partie de sortie du tuyau de mixage principal (70) ;
un système de mesure de couleur (72), raccordé à la partie de sortie du tuyau de mixage principal (70) par l'intermédiaire d'un raccordement d'échantillon (236) et d'une conduite d'échantillon (300), pour recevoir continûment un échantillon du flux de la composition de peinture, ledit système de mesure de couleur (72) comprenant une pompe d'échantillon (302) et une cellule d'inspection de fluide (304) raccordées toutes les deux en série à la conduite d'échantillon (300), la cellule d'inspection de fluide (304) comprenant une fenêtre de visualisation à travers laquelle l'échantillon peut être visualisé durant son écoulement, la pompe d'échantillon (302) étant exploitable pour pomper l'échantillon de la composition de peinture à travers la cellule d'inspection (304) à un écoulement turbulent sensiblement constant ;
un spectrophotomètre (306) positionné pour visualiser la partie d'échantillon du flux de la composition de peinture à travers la fenêtre de la cellule d'inspection de fluide (304), ledit spectrophotomètre (306) étant exploitable pour mesurer des valeurs de couleur de la partie d'échantillon et générer au moins un signal électrique représentatif de celles-ci ;
une unité de commande (74) connectée électriquement au spectrophotomètre (306) afin de recevoir l'au moins un signal électrique généré par le spectrophotomètre (306), ladite unité de commande (74) étant exploitable pour effectuer une comparaison des valeurs de couleur mesurées à des valeurs de couleur souhaitées et produire au moins un signal de commande électrique en fonction de la comparaison ;
au moins une pompe à colorant connectée électriquement à l'unité de commande (74) afin de recevoir l'au moins un signal de commande électrique, ladite au moins une pompe à colorant étant exploitable pour pomper l'au moins un colorant jusqu'au tuyau de mixage principal (70) en réponse à l'au moins un signal de commande électrique.

2. Système de production selon la revendication 1, dans lequel la fenêtre de visualisation comprend une lentille en saphir (362).

3. Système de production selon la revendication 2, dans lequel le plan de la lentille (362) est disposé perpendiculairement au flux de peinture entrant dans la cellule d'inspection de fluide (304).

4. Système de production selon la revendication 3, dans lequel le trajet d'écoulement de la cellule d'inspection de fluide (304) est généralement en forme de U.

5. Système de production selon la revendication 1, dans lequel les entrées (208-211) sont étagées le long de l'axe du tuyau de mixage principal (70) de façon à obtenir un mixage séquencé des composants au fur et à mesure que les composants s'écoulent à travers le tuyau de mixage principal (70).
